# EUROPÄISCHE PATENTANMELDUNG

(11) **EP 1 617 003 A2**
(43) Veröffentlichungstag der Anmeldung: **18.01.2006**
(21) Anmeldenummer: 05015420.2
(22) Anmeldetag: 15.07.2005
(51) Int. Cl.: E04B 5/02, E04B 5/48, E04C 2/38

(54) **Modulare Anlagenboden für Fertigungsanlagen**

(30) Priorität: 15.07.2004 DE 202004011176 U
(71) Anmelder: KUKA Schweissanlagen GmbH, 86165 Augsburg (DE)
(72) Erfinder: Zott, Josef Ulrich, 6420 Diedorf/Anhausen (DE); Rothenfusser, Marcus, 86316 Friedberg/Harthausen (DE)
(74) Vertreter: Ernicke, Hans-Dieter

(57) **Zusammenfassung**

Die Erfindung betrifft einen modularen Anlageboden (2) für Fertigungsanlagen (1) im Karosserierohbau von Fahrzeugen. Der Anlagenboden (2) besteht aus mehreren Bodenmodulen (3,4,5,6) mit einem umlaufenden und aus Rahmenprofilen (12) gebildeten Rahmen (8), der an mindestens einem Rahmenbereich einen Außenkanal (17) zur Aufnahme von Leitungen (18) besitzt. Das dortige Rahmenprofil (12) besitzt eine seitliche und nach außen weisende Profilöffnung (13). Das Rahmenprofil (12) ist als C-Profil ausgebildet und besitzt am Fußbereich eine den Außenkanal (17) seitlich begrenzende Abschlusswand (19), die eine geringere Höhe als das Rahmenprofil (12) aufweist.

## Beschreibung

Die Erfindung betrifft einen modularen Anlagenboden für Fertigungsanlagen mit den Merkmalen im Oberbegriff des Hauptanspruchs.

Ein solcher modularer Anlagenboden für Fertigungsanlagen im Karosserierohbau von Fahrzeugen ist aus der DE 695 02 734 T2 und auch aus der Praxis bekannt. Er besitzt einen umlaufenden Rahmen und hat innenliegende Kanäle zur Aufnahme von Leitungen, z.B. Stromkabeln, Kühlmittelleitungen oder dergleichen. Durch die Modularität kann der Anlagenboden an die jeweils herrschenden örtlichen Erfordernisse der Anlage angepasst werden. Sie erlaubt es ferner, bei Umrüstungen den Anlagenboden abzubauen und an anderer Stelle wieder neu aufzubauen, ggf. in einer anderen Modulkonfiguration. Bei den bisherigen Anlagenböden ist ein Abbau oder ein Umbau der Bodenmodule jedoch mit Blick auf die Verkabelung mit einem erhöhten Arbeits- und Zeitaufwand verbunden.

Es ist Aufgabe der vorliegenden Erfindung, einen verbesserten modularen Anlagenboden aufzuzeigen.

Die Erfindung löst diese Aufgabe mit den Merkmalen im Hauptanspruch.
Der an ein oder mehreren Rahmenbereichen vorhandene Außenkanal hat den Vorteil, die Leitungen für die Anlagenkomponenten, wie Roboter, Maschinen oder dergleichen, außen am Bodenmodul entlang verlegt werden können. Durch die nach außen weisende Profilöffnung ist der Außenkanal leicht und einfach zugänglich, so dass bei einem Abbau, Umbau oder Neuaufbau von Bodenmodulen die Leitungen schnell entfernt und auch schnell wieder verlegt werden können. Die beim Stand der Technik bisher vorgegebene Innenverlegung von Kabeln durch ein Bodenmodul ist nicht mehr erforderlich, kann allerdings für besondere Zwecke immer noch vorhanden sein. Bei Doppelmodulen lässt sich dies außerdem durch mindestens einen speziellen Querkanal vereinfachen und erleichtern. Bei einer Innenverlegung von Leitungen können endseitige Stecker oder andere lösbare Kupplungsverbindungen vorhanden sein, die beim Abbau oder Umbau einen Verbleib der Leitungen in den Bodenmodulen ermöglichen. Lösbare Leitungsverbindungen können auch bei den außen verlegten Leitungen vorhanden sein.

Durch die vorzugsweise umlaufend am Bodenmodul vorhandenen Außenkanäle ist außerdem eine Leitungsverlegung entlang der Modulränder gegeben. In Verbindung mit aufeinander abgestimmten Modulgrößen und einem einheitlichen Rastermaß ermöglicht diese Kanalgestaltung eine durchgehende Leitungsverlegung auch über mehrere Module hinweg. Hierdurch lassen sich große Leitungslängen günstig und montagefreundliche unterbringen.

Die Außenkanäle können durch Abschlusswände unter Bildung von Taschen oder Aufnahmerinnen seitlich abgeschlossen werden. Hier sind die Leitungen geschützt aufgenommen und dreiseitig von Wänden umgeben und geführt.

Die Bodenmodule können unterschiedliche Formgebungen haben, um eine Anpassung an unterschiedliche Formerfordernisse für den Anlagenboden gerecht zu werden. Die Bodenmodule können hierbei zumindest an einem Eckbereich eine Anschrägung oder Abrundung aufweisen, wobei solche Abschrägungen auch im Mittelbereich vorhanden sein können. Beim Zusammenstellen von Bodenmodulen im Rastermaß können diese Eckbereiche von benachbarten Bodenmodulen zusammentreffen und miteinander einen Freiraum bilden, in den mehrere Außenkanäle münden. Aus diesem Freiraum können die Leitungen nach oben zur Oberseite des Anlagenbodens heraus und zu den Anlagenkomponenten geführt sein. Die Freiräume können zentrale Verteilungsstellen für den Leitungsauslass bilden.

Außerdem erleichtern die angeschrägten Eckbereiche die gegenseitige Positionierung und Montage der Bodenmodule.

Die Bodenmodule lassen sich untereinander über vorbereitete und im Rastermaß angeordnete Verbindungsstellen fest miteinander verbinden. Hierbei können die Verbindungselemente, z.B. Schraubverbindungen, die Außenkanäle durchdringen, wofür entsprechende Führungen, z.B. vorbereitete Hülsen, vorgesehen sind, Dies erleichtert einerseits die Montage und Demontage der Bodenmodule und sorgt im weiteren für eine konfliktfreie Leitungsverlegung. Die benachbarten Bodenmodule stoßen hierbei mit ihren Außenkanälen und den dortigen Abschlusswänden plan aneinander, was die Montage und auch die Leitungsverlegung ebenfalls vereinfacht.

Zwischen benachbarten Bodenmodulen können ein oder mehrere Zwischenkanäle verlegt sein, um zusätzliche Freiräume zu schaffen, z.B. für eine Hauptleitungsstrecke mit einer Vielzahl von Leitungen oder Leitungsbündeln mit großen Durchmessern.

Die Bodenmodule und ihre Kanäle können mit Abdeckplatten versehen sein, um zwischen den Anlagenkomponenten einen begehbaren Anlagenboden zu schaffen. Die einzelnen Bodenmodule bestehen hierbei aus dem umlaufenden Rahmen und Querverstrebungen in dessen Innenbereich. Diese sorgen für die erforderliche Stabilität und ermöglichen die Auflagerung und Abstützung der meist schwergewichtigen Anlagenkomponenten oder deren Grundplatten. Hierbei können vorbereitete Befestigungsstellen mit einem Rastermaß vorhanden sein.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: Eine Draufsicht auf einen modularen Anlagenboden mit mehreren untereinander verbunden Bodenmodulen und mit Anlagenkomponenten,
- Figur 2:: eine Draufsicht auf einen teilweise geöffneten modularen Anlagenboden,
- Figur 3:: eine Stirnansicht des Anlagenbodens gemäß Pfeil III von Figur 2,
- Figur 4:: verschiedene Formen von Bodenmodulen,
- Figur 5 und 6:: ein offenes Bodenmodul in Draufsicht und geklappter Stirnansicht,
- Figur 7:: eine vergrößerte, abgebrochene und teilweise geschnittene Seitenansicht von zwei aneinander stoßenden Bodenmodulen mit Außenkanälen,
- Figur 8:: eine Variante von Figur 7 mit einem zusätzlichen Zwischenkanal.

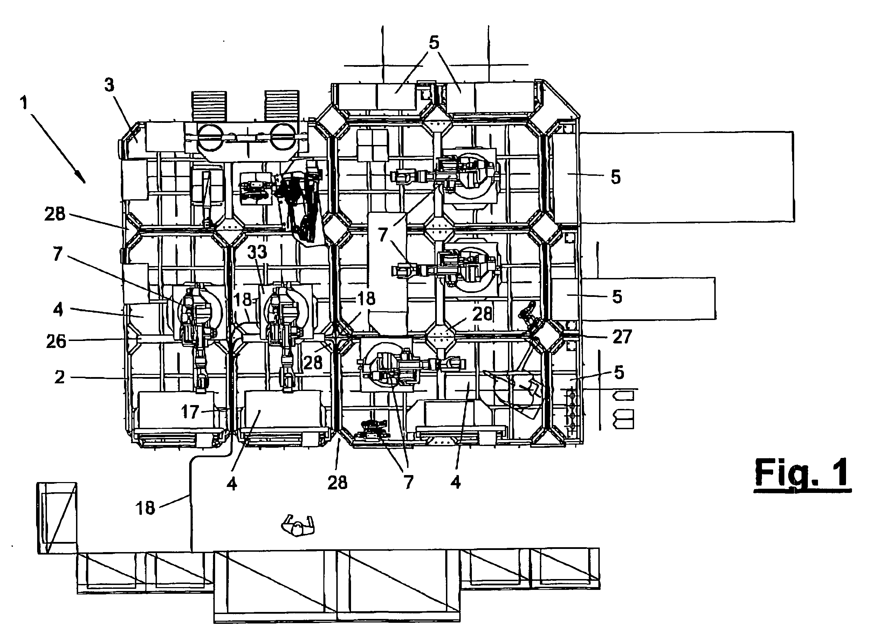

Figur 1 zeigt in der Draufsicht eine Fertigungsanlage (1) oder eine sog. Fertigungszelle, die mit einem modularen Anlagenboden (2) ausgerüstet ist, der auch als Zellenboden bezeichnet wird. Der Anlagenboden (2) besteht aus mehreren Bodenmodulen (3,4,5,6), die untereinander verbunden sind und eine Bodenstruktur bilden, auf der ein oder mehrere Anlagenkomponenten (7), ggf. unter Zwischenschaltung von Grund- oder Montageplatten (33), angeordnet sind. Die Anlagenkomponenten (7) können wie in Figur 1 gezeigt, mehrachsige Industrieroboter, insbesondere Gelenkarmroboter, stationäre Werkzeuge, Ablagetische, Zuführeinrichtungen, Schaltschränke oder dergleichen sein. Zwischen den Anlagenkomponenten (7) oder Grundplatten (33) können Abdeckplatten (15) auf der Bodenoberseite montiert oder lose aufgelegt sein, die ein unfallfreies Begehen des Anlagenbodens (2) erlauben.

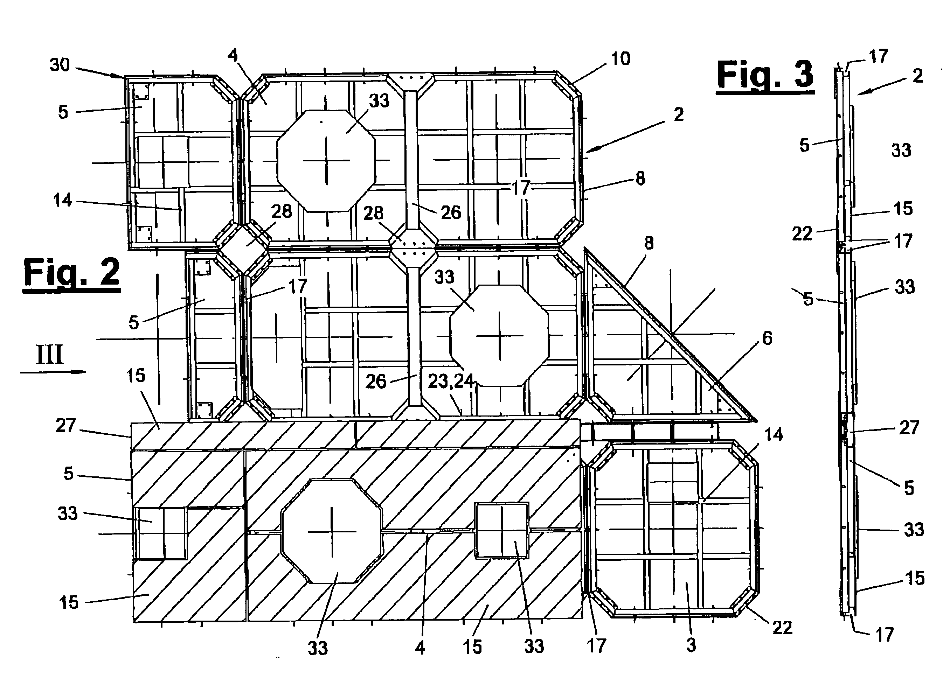

Figur 2 und 3 zeigen einen Anlagenboden (2) mit mehreren und unterschiedlichen Bodenmodulen (3,4,5) in Draufsicht und geklappter Seitenansicht sowie zum Teil in geöffneter Stellung und zum Teil in Abdeckstellung mit Abdeckplatten (15).

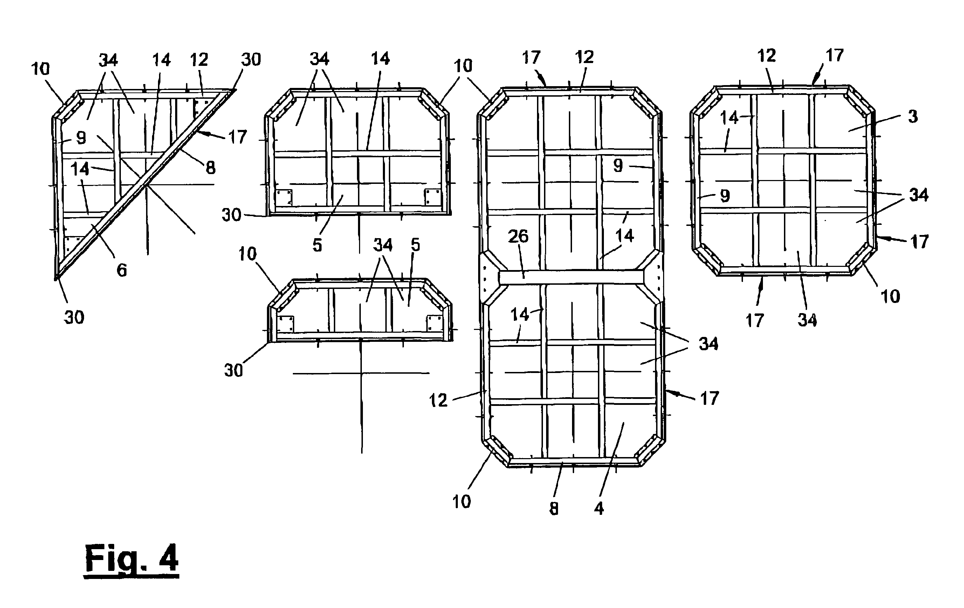

Figur 4 verdeutlicht hierzu eine Auswahl verschiedener Grundrissformen von Bodenmodulen (3,4,5,6). Die Bodenmodule (3,4,5,6) sind untereinander in der Größe und Gestalt unter Einbeziehung eines gemeinsamen Rastermaßes derart aufeinander abgestimmt, dass sie miteinander zu einer einheitlichen Bodenstruktur verbunden werden können. Die Verbindung erfolgt an den Seitenwänden der Bodenmodule (3,4,5,6) über mehrere vorbereitete und in einem Rastermaß gesetzte Verbindungsstellen (23).

Wie Figur 4 mit den verschiedenen Gestaltungsmöglichkeiten verdeutlicht, gibt es ein Basismodul (3) mit einer im wesentlichen quadratischen Grundfläche, wobei alle vier Eckbereiche (10) eine abgeschrägte Form aufweisen. Ein Doppelmodul (4) besteht aus zwei Basismodulen und besitzt eine gestreckte rechteckige Grundform mit ebenfalls vier angeschrägten Eckbereichen (10). Ferner sind ein oder mehrere Ergänzungsmodule (5,6) vorgesehen, die in der Breite und an mindestens einer Stirnseite die gleiche Form wie das Bodenmodul (3) oder das Doppelmodul (4) mit schrägen Eckbereichen (10) aufweisen. Die Ergänzungsmodule (5) sind allerdings ggf. in der Länge verkürzt und haben an der anderen Stirnseite scharfe Eckbereiche (30) mit rechtwinkligen Ecken.

Als vierte Variante ist noch ein im Grundriss im wesentlichen dreieckiges Eckmodul (6) vorhanden, welches eine gleichschenkelige Form mit einem angeschrägten 90°-Eckbereich (10) und scharfen, spitzwinkligen Eckbereichen (30) an den beiden anderen Ecken aufweist.

Daneben sind weitere Varianten von Bodenmodulen (3,4,5,6) möglich. Z.B. können die Bodenmodule (3,4,5,6) scharfe Eckbereiche (30) an Stelle der abgeschrägten Eckbereiche (10) haben.

Die Bodenmodule (3,4,5,6) haben jeweils einen umlaufenden Rahmen (8), der von nachfolgend näher beschriebenen Rahmenprofilen (12) gebildet wird. Im Innenbereich besitzt jeder Rahmen (3) mehrere einander kreuzende Querverstrebungen (14), die aus gleichen oder ähnlichen Profilen hergestellt sind und zumindest an der Bodenoberseite bündig mit den randseitigen Rahmenprofilen (12) abschließen. Durch diese Profile (12,14), die an der Oberseite mit breiten und auflagerfähigen Profilschenkeln (32) versehen sind, wird ein fachwerkartiger Modulaufbau gebildet.

Die Bodenmodule (3,4,5,6) in den verschiedenen Grundrissformen folgen hierbei einem einheitlichen Rastermaß, das z.B. von einem quadratrischen Grundraster (34) gebildet wird, welches zwischen den auf entsprechende Abstände gesetzten Profilen (12,14) ausgeformt wird. Abwandlungen des Grundrasters finden sich in den Bereichen mit den angeschrägten Ecken (10) und auch an den schräg abgeschnittenen Bereichen des dreieckigen Eckmoduls (6).

Die Bodenmodule (3,4,5,6) werden untereinander mit den geraden Rahmenschenkeln (9) verbunden, welche sich zwischen den angeschrägten Eckbereichen (10) befinden oder von diesen weg erstrecken.

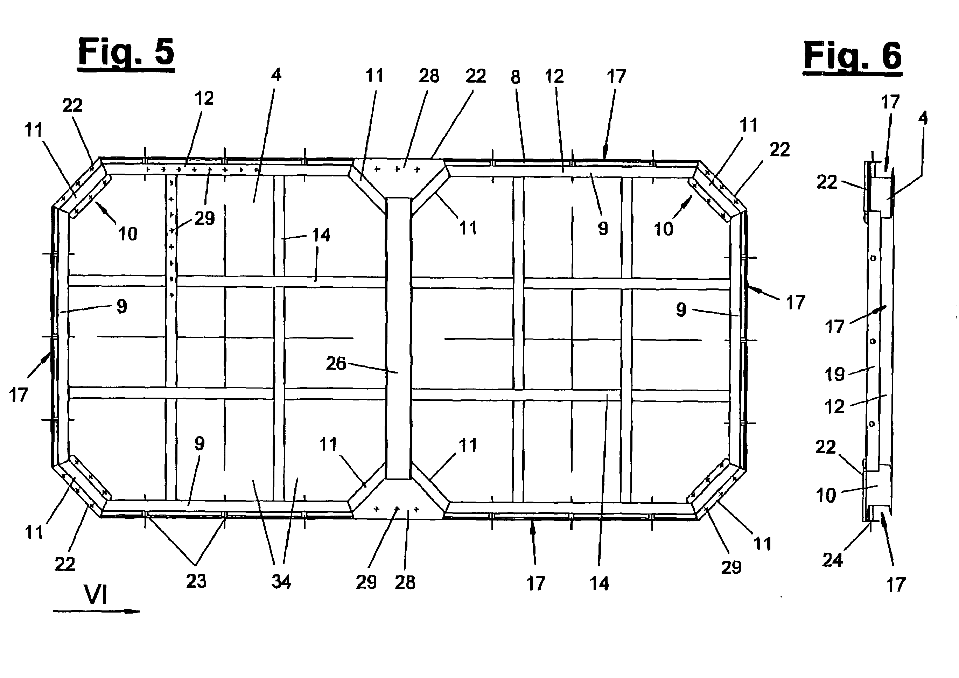

Figur 5 und 6 verdeutlichen in der Draufsicht und Seitenansicht ein Doppelmodul (4) im Detail. Es besteht in der vorerwähnten Weise aus zwei nebeneinander fluchtend angeordneten Basismodulen, wobei an der Verbindungsstelle ein durchgängiger Querkanal (26) vorhanden ist. An den Kanalmündungen sind wie in den angeschrägten Eckbereichen (10) Abschrägungen oder Abrundungen (11) der Rahmenprofile (12) vorhanden. Hierdurch wird an den Kanalmündungen ein trichterförmiger Freiraum (28) gebildet. Entsprechende Freiräume (28) entstehen bei einer Rastermontage der Bodenmodule (3,4,5,6) an den aneinander grenzenden angeschrägten Eckbereichen (10). Figur 1 und 2 verdeutlichen diese Ausbildung.

In Figur 5 ist ferner dargestellt, dass sich an den angeschrägten Eckbereichen (10) unter den Rahmenprofilen (12) Fundamentplatten (22) angeordnet sind, die seitlich über die Profile überstehen. Durch die Fundamentplatten (22) können die Rahmenprofile (12) vom Hallenboden distanziert und ggf. schwebend gehalten werden. Dies erlaubt in Grenzen den Ausgleich von Bodenunebenheiten.

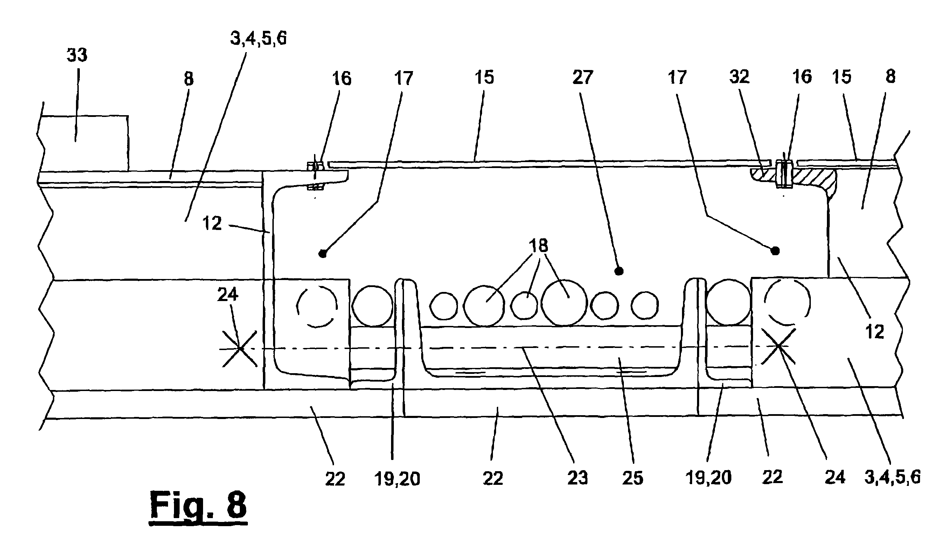

Die Fundamentplatten (22) bieten an den Überständen Platz für vorbereitete Befestigungsstellen (29), z.B. Durchgangsbohrungen. Auch an der Oberseite der Rahmenprofile (12) sowie der untereinander quer verbundenen Profile der Querverstrebungen (14) können entsprechende Befestigungsstellen (29) vorhanden sein, die ggf. auch in einem vorgegebenen Raster verteilt sind. An diesen Befestigungsstellen (29) können die Anlagenkomponenten (7), deren Grundplatten (33) oder auch die Bodenplatten (15) durch Schrauben oder dergleichen befestigt werden. Die Abdeckplatten (15) können alternativ auch lose aufgelegt und durch formschlüssige Führungen (16), z.B. Führungsstifte oder Führungsleisten, an der Oberseite der Profile (12,14) formschlüssig geführt sein, wie das beispielsweise Figur 8 verdeutlicht.

Der Rahmen (8) der Bodenmodule (3,4,5,6) weist an mindestens einem Rahmenbereich oder einer Rahmenseite einen Außenkanal (17) auf, der auch bei untereinander verbundenen Bodenmodulen (3,4,5,6) von außen und insbesondere von der Moduloberseite her zugänglich ist. Der Außenkanal (17) dient zur Aufnahme von Leitungen (18) oder anderen Gegenständen. Die Leitungen (18) können Stromkabel, Fluidleitungen oder dergleichen sein. Zur Kanalbildung weist das vorzugsweise als C-Profil ausgebildete und stehend angeordnete Rahmenprofil (12) eine seitliche und nach außen weisende Profilöffnung (13) auf. Um den Außenkanal (17) seitlich zu begrenzen, kann am Fußbereich des Rahmenprofils (12) eine hochragende Abschlusswand (19) angeordnet sein, die eine geringere Höhe als das Rahmenprofil (12) aufweist und z.B. bis etwa auf die halbe Profilsteghöhe reicht.

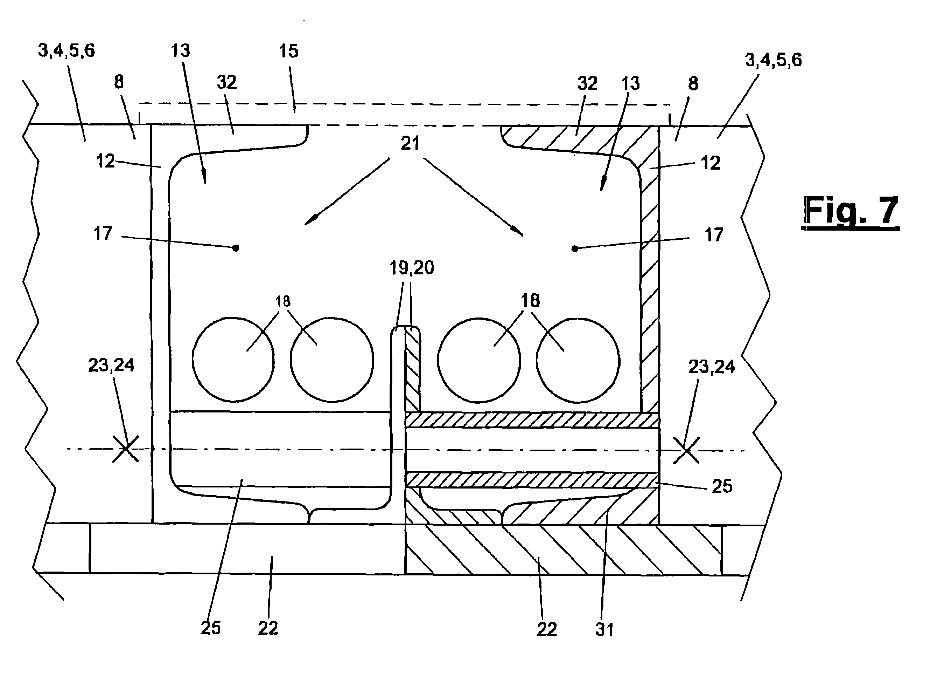

Figur 7 und 8 verdeutlichen diese Ausbildung. Die Abschlusswand (19) kann bündig vom Vorderende des unteren Profilschenkels (31) nach oben ragen. In der bevorzugten Ausführungsform ist die Abschlusswand (19) als Winkelprofil (20) ausgebildet, welches mit dem Fuß bzw. dem unteren Profilschenkel (31) des Rahmenprofils (12) verbunden, vorzugsweise verschweißt, ist. Durch die Winkelform wird die vertikale Abschlusswand (19) seitlich ein Stück von der Vorderfront des Rahmenprofils (12) distanziert. Hierdurch entsteht eine vergrößerte und bequem von oben her erreichbare Zugangsöffnung (21) für den im unteren Bereich taschenförmigen Außenkanal (17).

Die Abschlusswand (19) ist an den vorzugsweise im wesentlichen geraden Rahmenschenkeln (9) zwischen den Eckbereichen (10) angeordnet und endet an der dortigen Anschrägung oder Abrundung (11), die ebenfalls von einem C-förmigen und zur Seite offenen Rahmenprofil gebildet wird. Durch diese Bauform münden die Außenkanäle (17) in den Eckbereichen (10) und an den hiervon gebildeten Freiräumen (28). Die Außenkanäle (17) sind somit auch von den Stirnseiten her frei zugänglich. Durch das Rastermaß fluchten außerdem die Außenkanäle (17) von untereinander verbundenen Bodenmodulen (3,4,5,6). Außerdem kann eine fluchtende Anordnung und/oder eine seitliche Anschlussmöglichkeit zu einem Querkanal (26) der Doppelmodule (4) geschaffen werden. Durch die größenmäßige Abstimmung und insbesondere das einheitliche Rastermaß der Bodenmodule (3,4,5,6) entstehen lange und im wesentlichen gerade Kanalverläufe, durch die auch lange Leitungsabschnitte bequem und einfach verlegt werden können. Die an den schrägen Eckbereichen (10) und an den Mündungen der Querkanäle (26) vorhandenen Freiräume (28) sind prädestiniert, um hier Leitungen (18) aus dem Anlagenboden (2) heraus nach oben und weiter zu den Anlagenkomponenten (7) zu führen. Ansonsten ist durch die Zugangsöffnungen (21) auch im Bereich der Außenkanäle (17) ein Herausführen von Leitungen (18) möglich. In Figur 1 ist eine solche Leitungsführung am unteren Bodenrand mit der Verbindung zu externen Schaltschränken dargestellt

Die vorzugsweise an den Rahmen (8) zumindest an mehreren Seiten bzw. Rahmenschenkeln (9) sich erstreckenden und vorzugsweise umlaufenden Außenkanäle (17) können außerdem in die gegenseitige Verbindung der Bodenmodule (3,4,5,6) einbezogen werden. Die Verbindung kann z.B. über Schraubverbindungen (24) mit Gewindestangen und Muttern oder Schrauben und Muttern erfolgen. An den mehrfach vorhandenen Verbindungsstellen (23) ist hierbei jeweils eine Durchgangshülse (25) quer im Außenkanal (17) angeordnet, welche sich durch den Steg des Rahmenprofils (12) und durch die Abschlusswand (19) erstreckt. Dank des Rastermaßes fluchten die Durchgangshülsen (25) benachbarter Bodenmodule (3,4,5,6) und ermöglichen das Durchstrecken einer Schraube oder Gewindestange, mit deren Hilfe die Bodenmodule (3,4,5,6) mit den Abschlusswänden (19) plan aneinander stoßend im Anschluss verschraubt werden können. Die Leitungen (18) können im Bereich der Verbindungsstellen (23) über die Hülsen (25) weg verlegt sein. Figur 7 zeigt eine solche Direktverbindung von Bodenmodulen (3,4,5,6).

Alternativ kann zwischen den Bodenmodulen (3,4,5,6) und ihren Außenkanälen (17) ein Zusatzkanal (27) oder Zwischenkanal angeordnet sein, der ggf. auch mehrfach vorhanden ist. Der Zusatzkanal (27) kann die gleiche Form und Größe wie ein Querkanal (26) am Doppelmodul (4) haben. Figur 2, 3 und 8 verdeutlichen diese Ausbildung. Der Zwischenkanal (27) wird von einem liegenden und nach oben offenen U-Profil gebildet, zwischen dessen aufrechten Stegen ebenfalls eine Durchgangshülse (25) mit beidseitig freien Mündungsöffnungen angeordnet sein kann. Die Modulverbindung erfolgt in diesem Fall über den Zwischenkanal (27) hinweg. Durch den Zwischenkanal (27) wird zusätzlicher Freiraum zum Verlegen von Leitungen (18) geschaffen. Dies erleichtert das Verlegen von großen Kabel- oder Leitungsbäumen.

Über den Kanälen (17,26,27) können sich aus Sicherheitsgründen ebenfalls Abdeckplatten (15) befinden, die sich auf den oberen Profilschenkeln (32) abstützen. Die Abdeckplatten (15) können lose verlegt sein und seitlich durch die gezeigten Schraubstifte, feste Führungsleisten oder dergleichen andere Führungsmittel (16) formschlüssig geführt sein.

Wie Figur 1 verdeutlicht, münden mindestens einige Kanäle (17,26,27) an den Außenseiten des Anlagenbodens (2). An diesen Stellen können die Leitungen (18) von außen zugeführt werden. An den Freiräumen (28) sind Verzweigungen oder Umlenkungen der Leitungen (18) möglich. Figur 1 verdeutlicht außerdem einen Einsatzzweck der Ergänzungsmodule (5), die hier mit ihren scharfen Eckbereichen (30) zur Bildung gerader durchgehender Bodenrender eingesetzt werden. An diesen Stellen können äußere Anlagenkomponenten, z.B. Bauteilzuführungen oder dergleichen angeschlossen sein. Außerdem sind gerade Bodenränder günstig für die Positionierung und Aufnahme von Zäunen oder anderen Zellen- oder Anlagenabschlüssen, die an den Bodenmodulen befestigt und insbesondere verschraubt werden können.

Abwandlungen der gezeigten Ausführungsformen sind in verschiedener Weise möglich. Dies betrifft zum einen die konstruktive Gestaltung der Bodenmodule (3,4,5,6) mit ihrer Rahmenausbildung, den Innenverstrebungen sowie ihrer Grundrissform. Die Rahmenprofile (12) können zur Bildung der Außenseite (17) eine andere geeignete und zur Seite offene Profilform aufweisen. Die Quer- und Zwischenkanäle (26,27) können anders ausgebildet sein und auch entfallen. Die Querkanäle (26) können anders ausgerichtet und auch mehrfach, ggf. mit Kanalkreuzungen, vorhanden sein. Dies bietet sich insbesondere bei großen Bodenmodulen, wie Doppelmodulen (4) oder dgl. an. Ferner können die Bodenmodule (3,4,5,6) in anderer Weise untereinander verbunden werden.

### BEZUGSZEICHENLISTE

- 1: Fertigungsanlage, Zelle
- 2: Anlagenboden, Zellenboden
- 3: Bodenmodul, Basismodul
- 4: Bodenmodul, Doppelmodul
- 5: Bodenmodul, Ergänzungsmodul
- 6: Bodenmodul, Eckmodul
- 7: Anlagenkomponente
- 8: Rahmen
- 9: Rahmenschenkel
- 10: Eckbereich angeschrägt
- 11: Abschrägung, Abrundung
- 12: Rahmenprofil
- 13: Profilöffnung
- 14: Querverstrebung, Innenverstrebung
- 15: Abdeckplatte
- 16: Führung, Führungsleiste
- 17: Kanal, Außenkanal
- 18: Leitung, Kabel
- 19: Abschlusswand
- 20: Winkelprofil
- 21: Zugangsöffnung
- 22: Fundamentplatte
- 23: Verbindungsstelle
- 24: Schraubverbindung
- 25: Hülse, Durchgangshülse
- 26: Kanal, Querkanal
- 27: Kanal, Zusatzkanal, Zwischenkanal
- 28: Freiraum
- 29: Befestigungsstelle
- 30: Eckbereich scharf
- 31: Profilschenkel unten
- 32: Profilschenkel oben
- 33: Grundplatte
- 34: Grundraster

## Patentansprüche

1. Modularer Anlagenboden für Fertigungsanlagen (1), insbesondere für den Karosserierohbau von Fahrzeugen, bestehend aus mindestens einem Bodenmodul (3,4,5,6) mit einem umlaufenden Rahmen (8) und mit mindestens einem Kanal (17,26,27) für ein oder mehrere Leitungen (18), **dadurch gekennzeichnet, dass** der aus Rahmenprofilen (12) gebildete Rahmen (8) mindestens an einem Rahmenbereich einen Außenkanal (17) besitzt, wobei das dortige Rahmenprofil (12) eine seitliche, nach außen weisende Profilöffnung (13) aufweist.

2. Modularer Anlagenboden nach Anspruch 1, **dadurch gekennzeichnet, dass** das Rahmenprofil (12) als C-Profil ausgebildet ist.

3. Modularer Anlagenboden nach Anspruch 1 oder 2, **dadurch gekennzeichnet, dass** am Fußbereich des Rahmenprofils (12) eine den Außenkanal (17) seitlich begrenzende Abschlusswand (19) angeordnet ist.

4. Modularer Anlagenboden nach Anspruch 1, 2 oder 3, **dadurch gekennzeichnet, dass** die Abschlusswand (19) eine geringere Höhe als das Rahmenprofil (12) aufweist, wobei eine obere Zugangsöffnung (21) für den Außenkanal (17) gebildet wird.

5. Modularer Anlagenboden nach einem der vorhergehenden Ansprüche, **dadurch gekennzeichnet, dass** die Abschlusswand (19) als Winkelprofil (20) ausgebildet und mit dem Fuß des Rahmenprofils (12) verbunden, insbesondere verschweißt ist.

6. Modularer Anlagenboden nach einem der vorhergehenden Ansprüche, **dadurch gekennzeichnet, dass** der Rahmen (8) einen umlaufenden Außenkanal (17) aufweist.

7. Modularer Anlagenboden nach einem der vorhergehenden Ansprüche, **dadurch gekennzeichnet, dass** der Rahmen (8) an ein oder mehreren Eckbereichen (10) eine Abschrägung oder Abrundung (11) aufweist.

8. Modularer Anlagenboden nach einem der vorhergehenden Ansprüche, **dadurch gekennzeichnet, dass** die aneinander grenzenden Eckbereiche (10) von mehreren Bodenmodulen (3,4,5,6) miteinander einen Freiraum (28) bilden.

9. Modularer Anlagenboden nach einem der vorhergehenden Ansprüche, **dadurch gekennzeichnet, dass** die Abschlusswand (19) an im wesentlichen geraden Rahmenschenkeln (9) zwischen den Eckbereichen (10) angeordnet ist.

10. Modularer Anlagenboden nach einem der vorhergehenden Ansprüche, **dadurch gekennzeichnet, dass** das Bodenmodul (3,4,5,6) an den Eckbereichen (10) bodenseitig Fundamentplatten (22) aufweist.

11. Modularer Anlagenboden nach einem der vorhergehenden Ansprüche, **dadurch gekennzeichnet, dass** der Rahmen (8) an ein oder mehreren Seiten Verbindungsstellen (23) zum Nachbarrahmen aufweisen, wobei an den Verbindungsstellen (23) jeweils eine Durchgangshülse (25) quer im Außenkanal (17) angeordnet ist.

12. Modularer Anlagenboden nach einem der vorhergehenden Ansprüche, **dadurch gekennzeichnet, dass** das Bodenmodul (3,4,5,6) im Rahmeninnenraum ein oder mehrere Querverstrebungen (14) aufweist.

13. Modularer Anlagenboden nach einem der vorhergehenden Ansprüche, **dadurch gekennzeichnet, dass** das Bodenmodul (3,4,5,6) im Innenraum ein oder mehrere durchgehende Kanäle (26) aufweist.

14. Modularer Anlagenboden nach einem der vorhergehenden Ansprüche, **dadurch gekennzeichnet, dass** das Bodenmodul (3,4,5,6) an ein oder beiden Mündungen eines Kanals (26) mindestens eine Abschrägung oder Abrundung (11) aufweisen.

15. Modularer Anlagenboden nach einem der vorhergehenden Ansprüche, **dadurch gekennzeichnet, dass** zwischen benachbarten Bodenmodulen (3,4,5,6) ein Zusatzkanal (27) angeordnet ist.

16. Modularer Anlagenboden nach einem der vorhergehenden Ansprüche, **dadurch gekennzeichnet, dass** das Bodenmodul (3,4,5,6) am Rahmen (8) und/oder der Querverstrebung (14) Befestigungsstellen (29) für ein oder mehrere Anlagenkomponenten (7) aufweisen.

17. Modularer Anlagenboden nach einem der vorhergehenden Ansprüche, **dadurch gekennzeichnet, dass** das Bodenmodul (3,4,5,6) ein oder mehrere vorzugsweise lösbare Abdeckplatten (15) zur Bedeckung des Rahmeninnenraums und/oder der Kanäle (17,26,27) aufweist.

18. Modularer Anlagenboden nach einem der vorhergehenden Ansprüche, **dadurch gekennzeichnet, dass** das Bodenmodul (3,4,5,6) ein oder mehrere formschlüssige Führungen (16) für mindestens eine Abdeckplatte (15) aufweist

19. Modularer Anlagenboden nach einem der vorhergehenden Ansprüche, **dadurch gekennzeichnet, dass** die Bodenmodule (3,4,5,6) unterschiedliche Formen aufweisen.

20. Modularer Anlagenboden nach einem der vorhergehenden Ansprüche, **dadurch gekennzeichnet, dass** die Bodenmodule (3,4,5,6) eine prismatische Grundrissform aufweisen.

21. Modularer Anlagenboden nach einem der vorhergehenden Ansprüche, **dadurch gekennzeichnet, dass** die Bodenmodule (3, 4, 5, 6) im Grundriss im wesentlichen rechteckig oder dreieckig ausgebildet sind.

22. Modularer Anlagenboden nach einem der vorhergehenden Ansprüche, **dadurch gekennzeichnet, dass** ein Basismodul (3) eine im wesentlichen quadratische Grundrissform aufweist.

23. Modularer Anlagenboden nach einem der vorhergehenden Ansprüche, **dadurch gekennzeichnet, dass** ein Doppelmodul (4) eine längliche, im wesentlichen rechteckige Grundrissform mit einem zentralen Querkanal (26) aufweist.

24. Modularer Anlagenboden nach einem der vorhergehenden Ansprüche, **dadurch gekennzeichnet, dass** ein Doppelmodul (4) aus zwei Basismodulen aufgebaut ist.

25. Modularer Anlagenboden nach einem der vorhergehenden Ansprüche, **dadurch gekennzeichnet, dass** ein Ergänzungsmodul (5) eine im wesentlichen rechteckige Grundrissform mit zwei angeschrägten Eckbereichen (10) und zwei gegenüberliegenden scharfen Eckbereichen (30) aufweist.

26. Modularer Anlagenboden nach einem der vorhergehenden Ansprüche, **dadurch gekennzeichnet, dass** ein Eckmodul (6) eine im wesentlichen dreieckige, vorzugsweise gleichschenklige Grundrissform mit einem angeschrägten Eckbereich (10) aufweist.

27. Modularer Anlagenboden nach einem der vorhergehenden Ansprüche, **dadurch gekennzeichnet, dass** die Bodenmodule (3,4,5,6) eine aufeinander abgestimmte Größe und ein gemeinsames Rastermaß aufweisen.
